(19) 

Europäisches Patentamt
European Patent Office
Office européen des brevets

(11) **EP 2 051 497 A1**

(12) **EUROPEAN PATENT APPLICATION**
published in accordance with Art. 153(4) EPC

(43) Date of publication:
**22.04.2009 Bulletin 2009/17**

(21) Application number: **07792167.4**

(22) Date of filing: **08.08.2007**

(51) Int Cl.:
*H04N 1/405* (2006.01)  *B41C 1/00* (2006.01)
*G06T 5/00* (2006.01)

(86) International application number:
**PCT/JP2007/065499**

(87) International publication number:
**WO 2008/018491 (14.02.2008 Gazette 2008/07)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **08.08.2006 JP 2006215667**

(71) Applicant: **Kimoto Co., Ltd.**
**Shinjuku-ku,**
**Tokyo 160-0022 (JP)**

(72) Inventors:
• **BIZEN, Yoshio**
  **Tokyo 160-0022 (JP)**
• **UCHIYAMA, Yuji**
  **Saitama-shi**
  **Saitama 338-0013 (JP)**

(74) Representative: **Strehl Schübel-Hopf & Partner**
**Maximilianstrasse 54**
**80538 München (DE)**

(54) **SCREENING DEVICE AND METHOD**

(57)      In CTP or CTF platemaking using the inkjet method, gap (discontinuity) or nonlinearity of tone is improved to realize superior gradation reproduction.

A screening apparatus to which density information of an original picture is inputted, and which generates halftone dot data expressing tones corresponding to gradation of the original picture by using halftone dot patterns corresponding to inputted densities, and comprises a means for optimizing the combinations of halftone dots. The halftone dot patterns consist of combinations of one or more halftone dots of the same or different kinds selected from two or more kinds of halftone dots different in number of dots, and the means for optimizing optimizes the combinations of halftone dots so that relation of image area formed by an output device using the halftone dot patterns and the inputted density should constitute a desired function for at least a partial density range of the inputted density.

Fig.4A

**Description**

Technical Field

The present invention relates to a screening technique for use in CTP (Computer to Plate) or CTF (Computer to Film) platemaking using the inkjet method for output device (printer), in particular, improvement of halftone dot pattern for approximating a gradation image with a binary image.

Background Art

As techniques for expressing continuous tone original images, of which tone changes continuously, with printed tones, there are the AM screening technique using change of area ratios of halftone dots, the FM screening technique in which tones are expressed by number of halftone dots of minute areas (density), and the AM/FM hybrid screening technique in which FM type halftone dot arrangement is basically used and AM type halftone dot formation is combined for partial regions. With development of CTP or CTF techniques in recent years, in which printing plates are produced by printing on platemaking materials with a printer, the aforementioned halftone dot generation techniques, i.e., tone expression techniques, are replaced with digital screening. Digital screening is performed via a processing of converting image data or character data edited in a personal computer (PC) into bitmapped images of minimum pixel units (dots) of an output device using an apparatus called RIP (Raster Image Processor) or an apparatus called printer driver, and by this processing, data for halftone dots to be formed on a platemaking film or printing plate are created. Specifically, for example, a halftone dot threshold value template prepared for halftone dot cells consisting of a matrix of multiple AM pixels is stored in a memory beforehand, image density is compared with screen threshold value for every pixel in the template, and pixels in which the threshold value is lower than the image density are determined to be dot positions which should be outputted by an output device. These position data are halftone dot data, and tones which can be expressed are determined by the size of halftone dot cell. For example, a halftone dot cell consisting of a matrix of 10 x 10 pixels enables expression of 100 tones.

As the output device, those of laser light exposure type are mainly used at present. In the laser light exposure method, beam diameter can be made small, and if size of dot occupying one lattice (pixel) of a halftone dot cell is determined to be $\sqrt{2}$ times of the pixel size, increase in the dot number changes with change of tone in a substantially linear manner without causing tone gap. However, the laser light-exposure method still suffers from the problem of dot gain, which means that the size of dot actually printed becomes larger than pixel, and a technique for solving this problem has been proposed (Patent document 1).

Besides the laser light exposure method, platemaking methods using the inkjet method have also been put into practical use. In the inkjet method, dots tend to expand by bleeding of ink after printing, and therefore the smallest dot size generally tends to become large. Especially in the inkjet method for platemaking using UV ink, size reduction of UV ink ejection head is restricted. Therefore, change of density (tone) from 0 to 100% may be realized in a 10 x 10-pixel halftone dot cell with change of pixel number of from about 50 to 60, and tone cannot be reproduced with good precision only by control of the pixel number.

As a technique for compensating such resolution insufficiency originating in hardware (output device), there is a technique called super-cell or multi-cell (Patent document 2). In this technique, cells for controlling tone (for example, 8 x 8 pixels) are arranged in a multiple number (for example, 3 x 3), and tone is controlled by the total cells.

Patent document 1: Japanese Patent Unexamined Publication (KOKAI) No. 2006-94566
Patent document 2: Japanese Patent Unexamined Publication No. 2003-158633

Disclosure of the Invention

Object to be Achieved by the Invention

In the case of common printers for printing images to be seen by human eyes, various technique for improving image quality for observation by human eyes have been developed, and problems concerning precision of tone have substantially been solved. However, in the inkjet method for printing plates, it is desired to further improve precision of tone with following the existing binarization technique (AM screening).

Therefore, an object of the present invention is to improve gap (discontinuity) and nonlinearity of tone in CTP or CTF platemaking using the inkjet method and thereby realize superior tone reproducibility.

Means for Achieving the Object

In order to achieve the aforementioned object, the present invention basically uses the AM screening in a screening apparatus which produces halftone dot patterns by using the inkjet method as an output device, and FM type arrangement in which halftone dots of the same or different halftone dot areas are arranged in combination is employed for at least a partial density range, for example, a highlight portion (low tone portion), to compensate the nonlinearity between the halftone dot area and the dot area obtained by the output device and thereby improve continuity and reproducibility of tone.

That is, the screening apparatus of the present invention is a screening apparatus into which density information of an original picture is inputted, and which generates halftone dot data expressing tones corresponding to gradation of the original picture by using halftone dot patterns corresponding to inputted densities, wherein the halftone dot patterns consist of combinations of one or more halftone dots of the same or different kinds selected from two or more kinds of halftone dots different in number of dots, and the screening apparatus comprises a means for optimizing the combinations of halftone dots so that relation of image area to be printed by an output device using the halftone dot patterns and the inputted density should constitute a desired function for at least a partial density range of the inputted densities.

The screening apparatus of the present invention is preferably a screening apparatus of which output device is an inkjet printer.

In the screening apparatus of the present invention, the partial density range is preferably a region of 20 or less relative to the maximum density taken as 100. The aforementioned desired function is preferably a linear function or a quadratic function.

In the screening apparatus of the present invention, the means for optimizing optimizes the combinations of halftone dots so that change of the image area accompanying gradual change of the inputted density should be constant.

In the screening apparatus of the present invention, the halftone dot patterns are formed from multiple cells consisting of arranged multiple halftone dot cells determined by resolution of the output device and a predetermined screen ruling.

The screening apparatus of the present invention may comprise a means for preliminarily memorizing the halftone dot patterns as a table. Alternatively, the screening apparatus of the present invention may be a screening apparatus comprises a means for generating halftone dot patterns which generates halftone dot patterns consisting of combinations of one or more halftone dots of the same or different kinds selected from two or more kinds of halftone dots different in number of dots, and the means for generating halftone dot patterns comprises a means for optimizing the combinations of halftone dots so that relation of image area to be printed by the output device using the halftone dot patterns and the inputted density should constitute a desired function for at least a partial density range of the inputted density.

The screening method of the present invention is a screening method comprising inputting density information of an original picture and generating halftone dot data expressing tones corresponding to gradation of the original picture by using halftone dot patterns corresponding to inputted densities, which comprises the step (1) of determining halftone dot cells having a matrix size corresponding to predetermined output resolution, the step (2) of generating halftone dot patterns consisting of combinations of one or more halftone dots arranged in matrixes of the halftone dot cells in a manner corresponding to the inputted density, the step (3) of calculating image areas to be printed by an output device with the halftone dot patterns by using image areas of two or more kinds of halftone dots different in number of dots to be printed by the output device, and the step (4) of optimizing the halftone dot patterns so that the inputted density and the image area to be printed by the output device with the halftone dot patterns should be in a predetermined relation for at least a partial density range of the inputted density.

In the screening method of the present invention, for example, in the step (4) of optimizing, the halftone dot patterns may be determined so that the inputted density and the image area to be formed by the output device with the halftone dot patterns should be in a relation represented by a linear function or a quadratic function. Alternatively, in the step (4) of optimizing, the halftone dot patterns may be determined so that change of the image area accompanying gradual change of the inputted density should be constant.

In the screening method of the present invention, for example, the halftone dot cells determined in the step (1) may constitute multiple cells consisting of two or more of halftone dot cells, and in the determination of the halftone dot patterns in the step (4), when there are two or more kinds of halftone dot patterns giving the same image area for a predetermined inputted density, a halftone dot pattern of the largest number of the halftone dot cells in which the halftone dots are arranged may be chosen.

In this specification, in principle, each lattice point in the matrix constituting the halftone dot cell is called "pixel", and the minimum pixel unit of the output device is called "dot".

Best Mode for Carrying out the Invention

Hereafter, embodiments of the present invention will be explained.

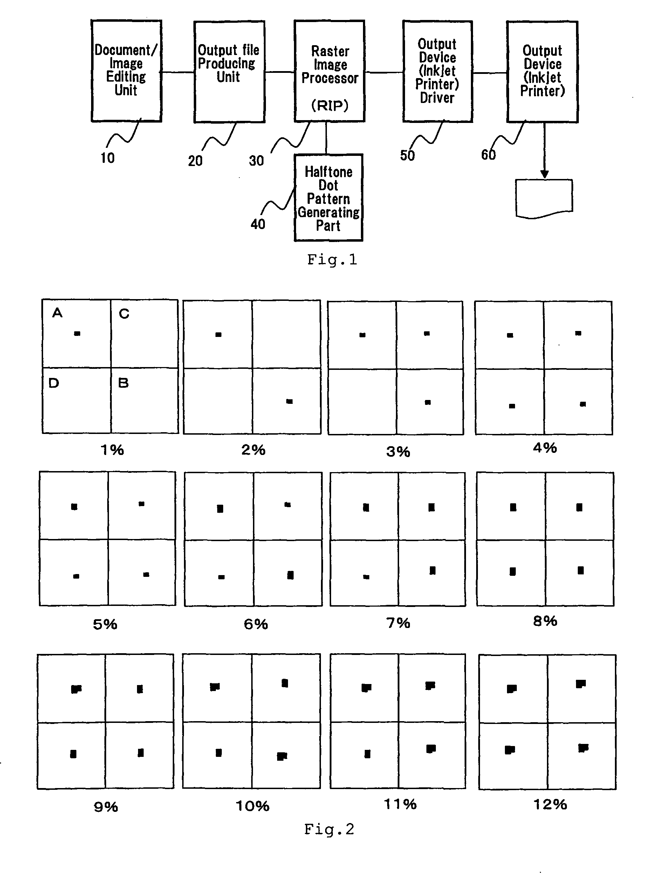

Fig. 1 schematically shows a whole platemaking (CTP) system comprising the screening apparatus of the present invention. This platemaking system comprises a unit 10 which edits a document or an image as an original of printing plate, an output file producing unit 20 which converts the original data edited by the editing unit 10 into data in an output file format for printing, a raster image processor (RIP) 30 which converts continuous gradation (continuous density) data produced in the output file producing unit 20 into two-tone data using predetermined halftone dot patterns, a halftone dot pattern generating part 40, a printer driver 50 which controls on/off of dot printing by an inkjet printer as the output device on the basis of data from RIP 30, and an inkjet printer 60. The screening apparatus of the present invention is constituted by RIP 30 and the halftone dot pattern generating part 40.

In this embodiment, RIP 30 develops data in an output file format inputted as continuous gradation or multi-tone data into pixel information suitable for output resolution of the printer 60, converts them into two-tone data using halftone dot patterns, and outputs the data to the printer driver 50. The halftone dot patterns are generated beforehand by the halftone dot pattern generating part 40, and saved in a memory in RIP 30 (not shown). This embodiment utilizes multi-cell type screening, and a multiple number (N) of arranged halftone dot cells each having a matrix size of M x M are used as a halftone dot pattern. The size of the halftone dot cells is determined by output screen ruling (definition) and performance of the output device (output resolution) set in the halftone dot pattern generating part 40 or RIP 30, and as the set screen ruling becomes larger, i.e., definition becomes higher, the size becomes smaller. For example, when the output resolution is represented by X (dpi) and the screen ruling is represented by Y (lpi), M satisfies the relation $X/Y \geqq M$, and as the screen ruling Y becomes larger, M becomes smaller and expressible tones become fewer.

As an example, halftone dot patterns each using 4 cells (2 cells x 2 cells) A to D each having a size of 5 pixels x 5 pixels are shown in Fig. 2. In the case of the example shown in the drawing, if one halftone dot cell is used and dots are placed in the pixels of the matrix (5 x 5 = 25 pixels) one by one, only densities of 0% (0/25), 4% (1/25), 8% (2/25), ... can be expressed. However, if 4 cells are used in combination, it becomes possible to express densities of the inputted data as densities of 1 to 100%. That is, as shown in the drawing, if the halftone dot number is increased by successively placing dots each consisting of one pixel in the four cells A, B, C and D, densities of 1 to 4% can be expressed, and if the halftone dot number is successively increased by placing dots each consisting of two pixels, densities of 5 to 8% can be expressed.

Although Fig. 2 shows the case where screen angle (angle of halftone dot arrangement direction from horizontal direction) is 0 degree, halftone dot matrixes of different screen angles such as 15 degrees, 45 degrees and 75 degrees may be used in the case of color printing in order to make moires (interference patterns resulting from periodic structure of halftone dots) hard to be visually recognized. The present invention can be used irrespective of the screen angle.

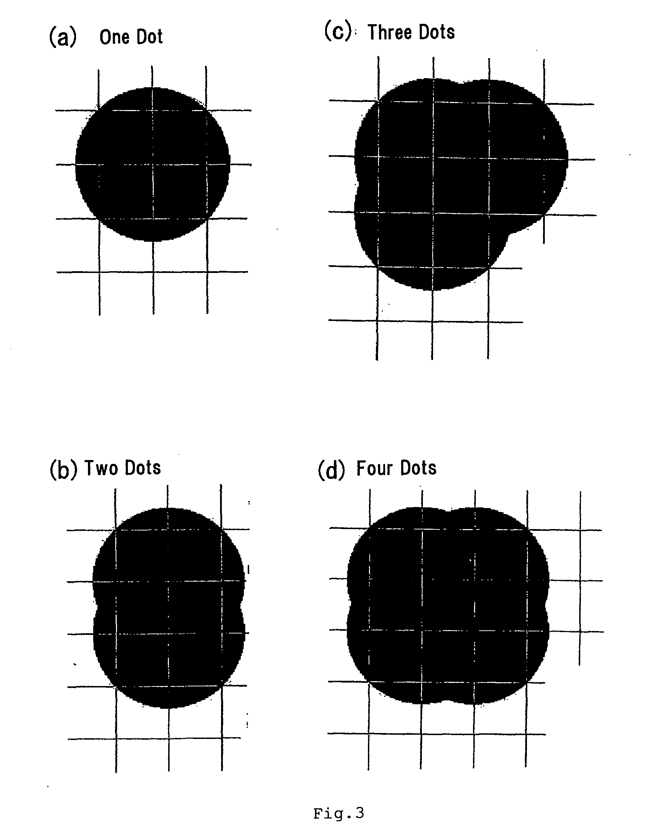

The halftone dot patterns are designed beforehand so that printing density (output density) to be obtained by printing using the halftone dot patterns and inputted density should be in a substantially linear relation, and they are set in a memory of RIP 30. When the size (area) of one pixel constituting the halftone dot cell does not significantly differ from the area of one dot printed by inkjet printer as the output device, relation between increase in the number of dots and the increase in density become close to a linear relation. However, diameters of dots actually obtained in the inkjet method are significantly larger than that corresponding to the output resolution, and therefore number of halftone dots formed from such dots and the density are not in a linear relation as shown in Figs. 3 (a) to (d). For this reason, when the halftone dot pattern changes from a pattern in which one dot is arranged in each cell to a pattern in which a halftone dot consisting of two or more overlapped dots are arranged, a gap is generated in density change. For example, in the example shown in Fig. 2, when the density changes from 4% to 5%, or from 8% to 9%, the gap of density change becomes large. This gap is especially significant in a region of low density.

Therefore, in this embodiment, combination and arrangement of the dots are optimized so that the gap of density change (gap of tone) should be minimized in a low density region of the halftone dot patterns, for example, a region of inputted density of 20% or less. Several types of optimization can be contemplated depending on the item considered important. For example, the following optimizations can be employed.

1) Optimization emphasizing gradation reproducibility (linearity) in highlight portion (low density region)
2) Optimization emphasizing continuity (optimization which makes change of output density attained by halftone dot screen constant)

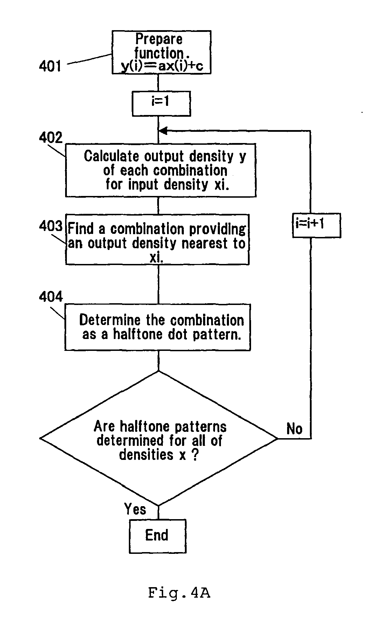

Among the aforementioned two kinds of optimizations, a specific procedure for the first optimization will be explained with reference to Fig. 4A.

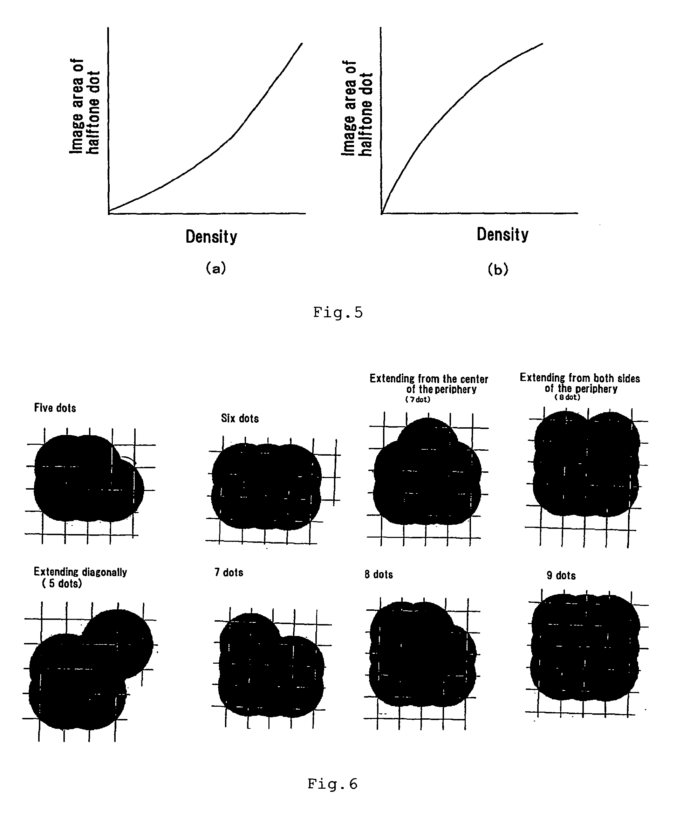

In this method, a predetermined function of the inputted density x and the output density y, y = f(x), is prepared (step 401). As the function, although a linear function y = ax (or y = ax + c) is typically used, a quadratic function such as those shown in Figs. 5 (a) and (b) may also be used. Then, combinations of halftone dots which satisfy output density represented by the function is determined. For this purpose, for example, output densities of combinations of the four kinds of halftone dots shown in Fig. 3, i.e., a halftone dot consisting of one dot, a halftone dot consisting of overlapped two dots, a halftone dot consisting of overlapped three dots and a halftone dot consisting of overlapped four dots, are calculated first (step 402). The output densities can be calculated by using image area of 1 dot and image areas of two or more of overlapped dots calculated beforehand. Although such image areas may be obtained by measuring areas of halftone dots actually printed by an output device, they can also be obtained by simulation. From these multiple combinations of halftone dots, a combination providing a value most close to a value obtained by the aforementioned function (for example, y = ax + c) is selected (step 403) for each inputted density (x) changing 1% by 1%, and it is used as a halftone dot pattern corresponding to that inputted density (step 404). The obtained halftone dot patterns are saved in a memory (not shown), and are applied to screening in RIP 30.

For the selection of combinations of halftone dots, there may be posed a restriction that halftone dots should be arranged as equally as possible in the multiple cells. For example, if image area of a case where one dot is arranged in each of n of cells and image area of a case where m of dots are arranged in one cell are identical to each other, the former arrangement is selected.

Granularity of halftone dots in a low gradation portion can be thereby reduced.

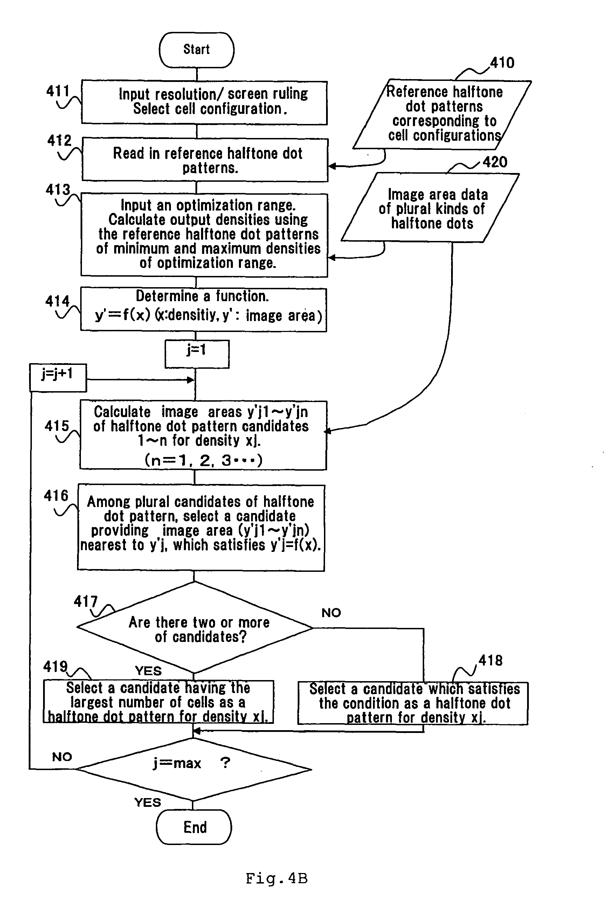

A procedure for performing the aforementioned optimization in the screening apparatus is shown in Fig. 4B. This procedure is executed by CPU incorporated into RIP 30 or the halftone dot pattern generating part 40.

First, when an output resolution X and a screen ruling Y are inputted by a user by means of an input means (not shown) provided in RIP 30 or the halftone dot pattern generating part 40, cell configuration corresponding to them is determined (step 411). For example, a halftone dot cell having the largest size is selected among two or more kinds of halftone dot cells of which matrix size M x M satisfies $X/Y \geqq M$. The number of cells is determined so that, for example, density resolution of the output should be 256 or higher. When the number of cells is represented by N, the number of cells N is determined so that the relation $M \times M \times N \geqq 256$ should be satisfied.

Besides the output resolution and screen ruling mentioned above, screen angle, color and halftone dot shape can also be inputted by a user, and a cell configuration corresponding to these inputted requirements is determined.

Then, reference halftone dot patterns 410 corresponding to the selected cell configuration are read in (step 412). The reference halftone dot patterns are memorized beforehand in the memory of the halftone dot pattern generating part 40, and conventional halftone dot patterns are used for them. As the reference halftone dot patterns, employable are halftone dot patterns in which cells in a number of N are each filled with a halftone dot consisting of one dot (or one unit) successively, then the halftone dot is changed from the halftone dot consisting of one dot to a halftone dot consisting of overlapped two dots, then the halftone dot is changed from the halftone dot consisting of overlapped two dots to a halftone dot consisting of overlapped three dots, and the same changing pattern is repeated to finally fill each cell with halftone dots in a number corresponding to the total pixel number of the cell, and so forth.

Then, a range of inputted density of which linearity is to be improved (namely, range to be optimized) is determined by a user. The density range may be set up by inputting numerals, or it may be made possible to accept a designation of highlight portion, high density portion or the like. After input of density range xmin to xmax to be optimized is received, image areas y'min and y'max obtainable with the reference halftone dot patterns for the minimum density xmin and the maximum density xmax of the density range are calculated (step 413). For example, when a range of 0 to 20% of inputted density is set as the range to be optimized, and the reference halftone dot pattern corresponding to the maximum density 20% is a pattern in which a halftone dot consisting of overlapped 4 dots is filled in each of cells in a number of N, N times of the image area given by printing of the halftone dot consisting of overlapped 4 dots corresponds to the image area y'max for the maximum density xmax. In this case, the image area for the minimum density 0 is 0. Printing densities (image areas) of two or more kinds of halftone dots are obtained beforehand and memorized as data 420.

After image areas are calculated for the maximum and minimum values of the density range to be optimized by using reference halftone dot patterns, a linear function (y' = ax (+c)) representing the relation between the inputted density x and the image area y' is determined (step 414). When such functions as shown in Figs. 5 (a) and (b) are adopted, the function can be obtained by, for example, further calculating image areas using the reference halftone dot patterns for one or more points (inputted densities) between the minimum and maximum densities, and performing function fitting using those values.

Then, for each of the discretized inputted densities xj (j = 1,2, 3 ... max), that is, for every one step of the inputted density, candidate halftone dot patterns are prepared, and image areas given by the candidate halftone dot patterns are calculated by using the image area data of dots 420 (step 415). Conditions for automatically preparing the candidate halftone dot patterns are the number of halftone dots and kind of halftone dots (halftone dot consisting of one dot, halftone dot consisting of overlapped two dots ...). The upper limit of the number of halftone dots is the cell number N. As for the kind of halftone dots, kinds of halftone dot used for each inputted density may be determined beforehand and used, or the kinds of halftone dot used for the reference halftone dot patterns may also be used. In this embodiment, all the kinds of the halftone dots adopted in the reference halftone dot patterns for the set inputted density range are used. The number of the combinations (number of candidates) prepared under such conditions corresponds to Nth power of (number of kinds of halftone dots + 1) including the case where the cell is not filled with halftone dot.

In order to further restrict the number of candidates, the number of dots may be restricted for each inputted density. Specifically, when the total number of dots of a reference halftone dot pattern for a certain inputted density is K, combinations in the same number or a number smaller or larger than that number by 1, 2 or so are used as the candidates.

Explanation will be made for a case, as an example, where four kinds of halftone dots, halftone dot consisting of one dot to halftone dot consisting of overlapped four dots, are used in reference halftone dot patterns (multiple cells having a cell number N) for a set density range, and a reference halftone dot pattern for an inputted density xj, for which candidates of halftone dot pattern are to be prepared, consists of combinations of k1 to k4 of halftone dots each consisting of one dot to overlapped four dots.

In this case, the total dot number K of the reference halftone dot pattern is represented by the following equation.

$$K = 1 \times k1 + 2 \times k2 + 3 \times k3 + 4 \times k4$$

Halftone dot patterns of which numbers of the halftone dots each consisting of one dot to overlapped four dots, k'1 to k'4, satisfy the following equations (1) and (2) are used as candidate halftone dot patterns.

$$k'1 + k'2 + k'3 + k'4 \leqq N \qquad (1)$$

$$1 \times k'1 + 2 \times k'2 + 3 \times k'3 + 4 \times k'4 = K \text{ or } K \pm 1 \text{ or } 2$$
$$(2)$$

After candidate halftone dot patterns satisfying such conditions are prepared, image areas y'j1 to y'jn obtainable by using each of the candidate halftone dot patterns are calculated. Also in this case, the image area data of dots 420 are used for the calculation of image areas. The image areas calculated for the candidates are compared with image area y'j calculated according to the function determined in the step 414 (y' = f(x)), and a candidate giving an image area identical to the image area y'j or a closest image area is selected as a halftone dot pattern for that inputted density (steps 416 and 418). When two or more candidates are selected, a candidate giving a value of the left side of the equation (1) nearest to the cell number N (namely, a candidate of which halftone dot cell number is largest) is selected as a halftone dot pattern for that inputted density (steps 417 and 419).

The steps 415 to 419 described above are repeated for each inputted density up to maximum value of the range selected for optimization to determine halftone dot patterns of the range. Optimization can be thereby performed for the optimization range of inputted density inputted in the step 413 so that the relation between the inputted density and output density should satisfy the function determined in the step 414.

By the first optimization, halftone dot patterns giving superior gradation reproducibility of highlight portions can be obtained, and by using this halftone dot patterns for low density regions in RIP 30, images are printed on a plate material by an output device with good gradation reproduction.

In the above explanation of this embodiment, for determining a function for the range to be optimized, reference halftone dot patterns memorized beforehand in the memory are read in, and image areas at the maximum and minimum values of the optimization range are obtained from those reference halftone dot patterns. However, a function representing relation of inputted density and image area for the whole range of the inputted density may be determined, and the step 415 and the following steps may be performed with them, without using such reference halftone dot patterns as described above. In such a case, the steps 412 to 414 are omitted.

The procedure for the second optimization will be explained below. In this procedure, the halftone dot patterns are determined so that increasing rate of output density of the halftone dot matrixes corresponding to inputted densities should be constant. In this case, if density steps are represented by i = 1,2, 3, ... k, the (i+1)th output pattern (density: Di+1) is determined so that density increasing rate (Di - Di-1) between the (i-1)th step and the (i)th step and density increasing rate (Di+1 - Di) between the (i)th step and the (i+1)th step should be the same.

$$Di+1 - Di = Di - Di-1$$

$$Di+1 = 2Di - Di-1$$

Since this limitative condition is effective only within a part of the range of i, the output patterns are determined so that difference of the increasing rates between adjacent parts should be minimized. The range of each part is the maximum range in which the halftone dot cells successively change in the same manner. For example, when the number of the cells constituting the multiple cells is M, the halftone dot cells are each successively filled with one dot in the density range of 1 to M. In this case, whenever density increases by 1, halftone dot number in the halftone dot cells changes by 1, and the increasing rate is constant (1 dot) up to the density M. Then, in the range of density M+1 or higher, combinations of halftone dot consisting of one dot and halftone dot consisting of overlapped two dots, three dots, or the like are used, and combinations giving an increasing rate constant and nearest to the increasing rate in the density range of 1 to M are selected also in this case. For example, in the range of density M+1 to 2M, halftone dots consisting of one dot filled in the halftone dot cells are successively replaced with a halftone dot consisting of three dots. The increasing rate in this case is difference of output density given by the halftone dot consisting of one dot and output density given by the halftone dot consisting of three dots.
By this second optimization, halftone dot patterns giving smoothly continued gradation are obtained, and by using these halftone dot patterns for a low density region in RIP 30, images showing little gradation gap are printed on a plate material by an output device.

Although the optimizations explained above are desirably performed for a low density region of halftone dot patterns, they may also be performed for the total region, or a partial region of any existing halftone dot patterns which poses a problem of density gap. For example, the above explanation is made for a case of using four kinds of halftone dots, a halftone dot consisting of one dot, a halftone dot consisting of overlapped two dots, a halftone dot consisting of overlapped three dots and a halftone dot consisting of overlapped four dots. However, as shown in Fig. 6, the halftone dot grows up to a halftone dot consisting of a larger number of overlapped dots according to the size of halftone dot cell. In such a case, change of the image area formed by the halftone dot and the number of dots constituting the halftone dot are not necessarily in a linear relation depending on the direction of growth of the halftone dot. Also in such a case, by applying the present invention, it becomes possible to improve the linearity (gradation reproducibility).

Further, although the explanation of this embodiment was made for a case where halftone dot patterns optimized as described above are prepared beforehand, and stored in a memory, software (program) may be installed in RIP 30 to perform the optimization as serial processing. However, in view of improvement in the processing speed, it is desirable to prepare then beforehand.

Examples

Hereafter, examples of optimization of halftone dot patterns performed in the screening apparatus of the present invention will be explained. In the following examples, the output resolution was 1440 dpi, the diameter of 1 dot printed by the output device (inkjet printer) was 50 μm, the halftone dot cell consisted of 8 pixels x 8 pixels to secure an output screen ruling of 175 lines, and three kinds of halftone dot patterns were prepared for controlling tones with multiple cells consisting of 3 x 3 of the cells (24 pixels x 24 pixels).

The image areas obtainable by the output device using these halftone dot patterns were calculated as follows by using a graphic editor. The graphic editor was set up first so that 1 pitch of 1440 dpi (17.64 μm) should correspond to 50 pixels on a screen (henceforth pixels on the screen of the graphic editor are called screen pixels in order to distinguish them from the pixels of the halftone dot cells). Thus, the diameter of one dot constituting the halftone dot, 50 μm, corresponded to a diameter of 142 screen pixels {(50 μm/17.64) x 50 screen pixels} on the screen, 8 dots corresponded to 400 screen pixels, and 24 dots corresponded to 1200 screen pixels. After such setting as described above, a screen consisting of 1200 screen pixels x 1200 screen pixels was opened on the graphic editor, grids were displayed on the screen at intervals of 50 screen pixels, dots having a diameter of 142 screen pixels were drawn on the grids, and the areas blacked by them were read in a histogram to calculate the halftone dot areas.

As the halftone dots, such halftone dot consisting of one dot, halftone dot consisting of overlapped two dots, halftone dot consisting of overlapped three dots and halftone dot consisting of overlapped four dots as shown in Fig. 3 were drawn, and areas thereof were calculated. The results were 1963.5 μm$^2$, 2824.8 μm$^2$, 3542.8 μm$^2$, and 3973.4 μm$^2$, respectively. By using the areas calculated for the halftone dots, output densities obtainable with the output device by using halftone dot patterns prepared by combining the four kinds of halftone dots were calculated.

<Reference Example>

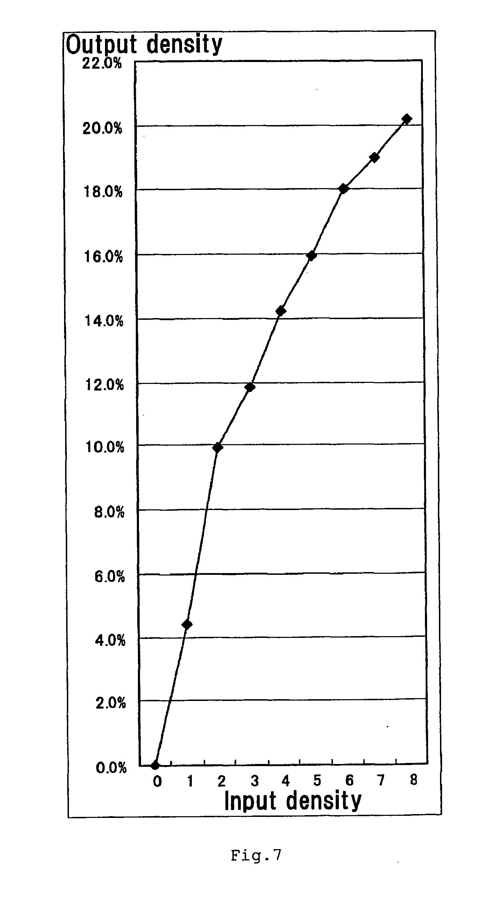

Halftone dot patterns in which tones are controlled with conventional multiple cells (24 pixels x 24 pixels) consisting of 3 x 3 halftone dot cells (8 pixels x 8 pixels) are shown in Table 1, and the relation of output density (area specific density) obtainable with these halftone dot patterns and inputted density is shown in the graph of Fig. 7. These halftone dot patterns were prepared by performing a dither processing of two patterns of two tones within the multiple cells on the basis of AM screening (namely, on the basis of the technique of changing halftone dots having a smaller area to halftone dots having a larger area as tone becomes higher). The inputted densities mentioned in this reference example are represented with numerical values of 0 to 8 assigned to the halftone dot patterns from one in which no halftone dot is filled in the nine cells constituting the multiple cells (density is 0) to one in which a halftone dot consisting of 4 dots is filled in each cell, and are not the same as the actual inputted densities.

[Table 1]

| Inputted density | 1 dots 1973.6 | 2 dots 2839.4 | 3 dots 3593.3 | 4 dots 4016.3 | Halftone dot area | Area specific density 179235 (100%) |
|---|---|---|---|---|---|---|
| 0 | 0 | 0 | 0 | 0 | 0.0 | 0.0% |
| 1 | 4 | | | | 7894.4 | 4.4% |
| 2 | 9 | | | | 17762.4 | 9.9% |
| 3 | 5 | 4 | | | 21225.6 | 11.8% |
| 4 | 0 | 9 | | | 25554.6 | 14.3% |
| 5 | 0 | 5 | 4 | | 28570.2 | 15.9% |
| 6 | 0 | 0 | 9 | | 32339.7 | 18.0% |
| 7 | 0 | 0 | 5 | 4 | 34031.7 | 19.0% |
| 8 | 0 | 0 | 0 | 9 | 36146.7 | 20.2% |
| 9 | 0 | 0 | 0 | 0 | 0.0 | 0.0% |
| 10 | 0 | 0 | 0 | 0 | 0.0 | 0.0% |
| 11 | 0 | 0 | 0 | 0 | 0.0 | 0.0% |
| 12 | 0 | 0 | 0 | 0 | 0.0 | 0.0% |
| 13 | 0 | 0 | 0 | 0 | 0.0 | 0.0% |
| 14 | 0 | 0 | 0 | 0 | 0.0 | 0.0% |
| 15 | 0 | 0 | 0 | 0 | 0.0 | 0.0% |
| 16 | 0 | 0 | 0 | 0 | 0.0 | 0.0% |
| 17 | 0 | 0 | 0 | 0 | 0.0 | 0.0% |
| 18 | 0 | 0 | 0 | 0 | 0.0 | 0.0% |
| 19 | 0 | 0 | 0 | 0 | 0.0 | 0.0% |
| 20 | 0 | 0 | 0 | 0 | 0.0 | 0.0% |

As seen from the results shown in the graph of Fig. 7, as for the relation between the output density and the inputted density, the increasing ratio of the inputted density is different in the region in which the halftone dots each consisting of 1 dot are successively filled into the nine cells (density: 0 to 2%), the following region in which the halftone dots each consisting of overlapped two dots are successively filled into the nine cells (density: 2 to 4%), region in which the halftone dots each consisting of overlapped three dots are successively filled into the nine cells (density: 4 to 6%), and region in which the halftone dots each consisting of overlapped four dots are successively filled into the nine cells (density: 6 to 8%). Thus, gaps are generated at borders of these regions, and linearity is degraded.

<Example 1>

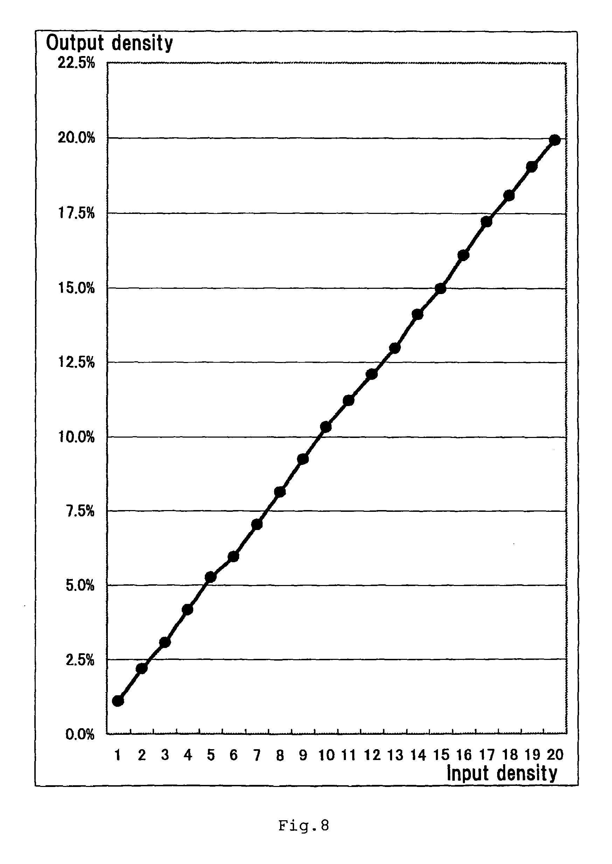

For the region of density of 20% or lower, halftone dot patterns were prepared by choosing combinations of halftone dots giving values closest to values given by a linear function representing linear relation with the inputted density from combinations of halftone dots providing substantially the same densities. The prepared halftone dot patterns are shown in Table 2, and the relation of the output density (area specific density) produced by these halftone dot patterns and the inputted density is shown in the graph of Fig. 8.

[Table 2]

| Density \ Area | 1 Dot 1963.5 | Overlapped 2 dots 2824.8 | Overlapped 3 dots 3542.8 | Overlapped 4 dots 3973.4 | Area specific density 179234 (100%) |
|---|---|---|---|---|---|
| 1 | 1 | 0 | 0 | 0 | 1.10% |
| 2 | 2 | 0 | 0 | 0 | 2.19% |
| 3 | 1 | 0 | 1 | 0 | 3.07% |
| 4 | 2 | 0 | 1 | 0 | 4.17% |
| 5 | 3 | 0 | 1 | 0 | 5.26% |
| 6 | 4 | 1 | 0 | 0 | 5.96% |
| 7 | 5 | 1 | 0 | 0 | 7.05% |
| 8 | 6 | 1 | 0 | 0 | 8.15% |
| 9 | 7 | 1 | 0 | 0 | 9.24% |
| 10 | 8 | 1 | 0 | 0 | 10.34% |
| 11 | 7 | 1 | 1 | 0 | 11.22% |
| 12 | 6 | 1 | 2 | 0 | 12.10% |
| 13 | 5 | 1 | 3 | 0 | 12.98% |
| 14 | 4 | 1 | 3 | 1 | 14.10% |
| 15 | 3 | 1 | 4 | 1 | 14.99% |
| 16 | 2 | 1 | 4 | 2 | 16.11% |
| 17 | 1 | 1 | 4 | 3 | 17.23% |
| 18 | 0 | 1 | 5 | 3 | 18.11% |
| 19 | 0 | 1 | 1 | 7 | 19.07% |
| 20 | 0 | 0 | 0 | 9 | 19.95% |

As also seen from the results shown in the graph of Fig. 8, the halftone dot patterns of this example are optimized with emphasis on gradation reproducibility of highlight portions, and it can be seen that they are halftone dot patterns showing extremely good linearity, i.e., good gradation reproducibility.

<Example 2>

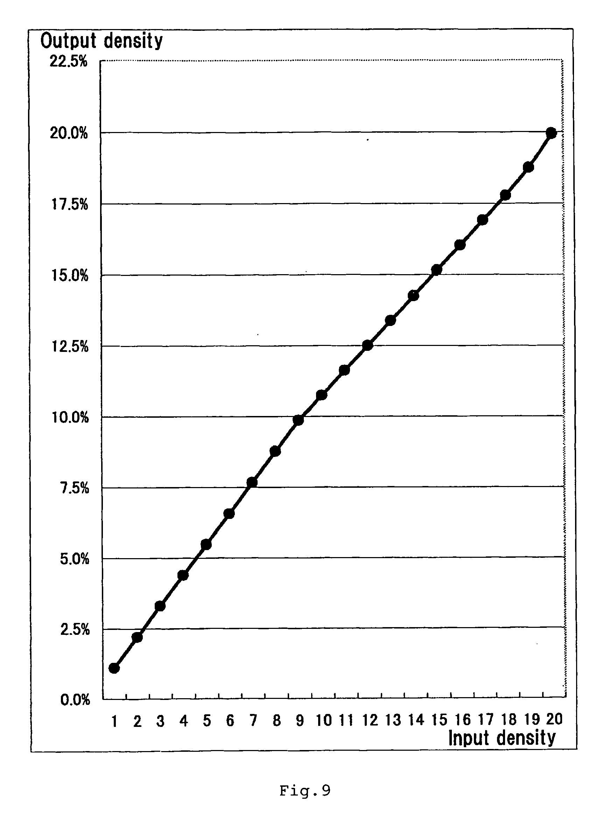

For the region of density of 20% or lower, halftone dot patterns were prepared by choosing combinations of halftone dots giving substantially constant change of output density before and after each value of output density stepwise changing. The prepared halftone dot patterns are shown in Table 3, and the relation of the output density (area specific density) produced by these halftone dot patterns and the inputted density is shown in the graph of Fig. 9.
[Table 3]

| Density \ Area | 1 Dot 1963.5 | Overlapped 2 dots 2824.8 | Overlapped 3 dots 3542.8 | Overlapped 4 dots 3973.4 | Area specific density 179234 (100%) |
|---|---|---|---|---|---|
| 1 | 1 | 0 | 0 | 0 | 1.10% |
| 2 | 2 | 0 | 0 | 0 | 2.19% |
| 3 | 3 | 0 | 0 | 0 | 3.29% |
| 4 | 4 | 0 | 0 | 0 | 4.38% |
| 5 | 5 | 0 | 0 | 0 | 5.48% |
| 6 | 6 | 0 | 0 | 0 | 6.57% |
| 7 | 7 | 0 | 0 | 0 | 7.67% |
| 8 | 8 | 0 | 0 | 0 | 8.76% |
| 9 | 9 | 0 | 0 | 0 | 9.86% |
| 10 | 8 | 0 | 1 | 0 | 10.74% |
| 11 | 7 | 0 | 2 | 0 | 11.62% |
| 12 | 6 | 0 | 3 | 0 | 12.50% |
| 13 | 5 | 0 | 4 | 0 | 13.38% |
| 14 | 4 | 0 | 5 | 0 | 14.27% |
| 15 | 3 | 0 | 6 | 0 | 15.15% |
| 16 | 2 | 0 | 7 | 0 | 16.03% |
| 17 | 1 | 0 | 8 | 0 | 16.91% |
| 18 | 0 | 0 | 9 | 0 | 17.79% |
| 19 | 0 | 0 | 5 | 4 | 18.75% |
| 20 | 0 | 0 | 0 | 9 | 19.95% |

As also seen from the results shown in the graph of Fig. 9, although the inclination of the line slightly changes in the region of inputted density of 0 to 9% and the region of inputted density of 10 to 19%, the halftone dot patterns of this example are halftone dot patterns showing good linearity for change of density.

Brief Description of the Drawings

[Fig. 1] Drawing schematically showing a whole CTP system to which the present invention is applied.
[Fig. 2] Drawing showing examples of halftone dot pattern corresponding to each density.
[Fig. 3] Drawings showing multiple kinds of halftone dots of which number of constituting dots are different.
[Fig. 4A] Flowchart showing outline of optimization procedure.
[Fig. 4B] Flowchart showing optimization procedure.
[Fig. 5] Graphs showing examples of function used for optimization.
[Fig. 6] Drawings showing multiple kinds of halftone dots of which number of constituting dots are different.
[Fig. 7] Graph showing relation of output density (area specific density) and inputted density in Reference Example.
[Fig. 8] Graph showing relation of output density (area specific density) and inputted density in Example 1.
[Fig. 9] Graph showing relation of output density (area specific density) and inputted density in Example 2. Description of Numerical Notations

10 ...    Editing unit
20 ...    Output file producing unit
30 ...    Raster image processor
40 ...    Half tone dot pattern generating part
50 ...    Driver for output device
60 ...    Inkjet printer

**Claims**

1. A screening apparatus into which density information of an original picture is inputted, and which generates halftone dot data expressing tones corresponding to gradation of the original picture by using halftone dot patterns corresponding to inputted densities, wherein:

   the halftone dot patterns consist of combinations of one or more halftone dots of the same or different kinds selected from two or more kinds of halftone dots different in number of dots, and
   the screening apparatus comprises a means for optimizing the combinations of halftone dots so that relation of image area to be printed by an output device using the halftone dot patterns and the inputted density should constitute a desired function for at least a partial density range of the inputted densities.

2. The screening apparatus according to claim 1, wherein:

   the output device is an inkjet printer.

3. The screening apparatus according to claim 1, wherein:

   the partial density range is a range of 20 or less relative to the maximum density taken as 100.

4. The screening apparatus according to claim 1, wherein:

   the desired function is a linear function or a quadratic function.

5. The screening apparatus according to claim 1, wherein:

   the means for optimizing optimizes the combinations of halftone dots so that change of the image area accompanying stepwise change of the inputted density should be constant.

6. The screening apparatus according to any one of claims 1 to 5, wherein:

   the halftone dot patterns are formed from multiple cells consisting of arranged multiple halftone dot cells determined by resolution of the output device and a predetermined screen ruling.

7. The screening apparatus according to any one of claims 1 to 6, wherein:

   the apparatus comprises a means for preliminarily memorizing the halftone dot patterns as a table.

8. The screening apparatus according to any one of claims 1 to 6, wherein:

   the apparatus comprises a means for generating halftone dot patterns which generates halftone dot patterns consisting of combinations of one or more halftone dots of the same or different kinds selected from two or more kinds of halftone dots different in number of dots, and
   the means for generating halftone dot patterns comprises a means for optimizing the combinations of halftone dots so that relation of image area to be printed by the output device using the halftone dot patterns and the inputted density should constitute a desired function for at least a partial density range of the inputted density.

9. A screening method comprising inputting density information of an original picture and generating halftone dot data expressing tones corresponding to gradation of the original picture by using halftone dot patterns corresponding to inputted densities, which comprises:

   the step (1) of determining halftone dot cells having a matrix size corresponding to predetermined output resolution,
   the step (2) of generating halftone dot patterns consisting of combinations of one or more halftone dots arranged in matrixes of the halftone dot cells in a manner corresponding to the inputted density,
   the step (3) of calculating image areas to be printed by an output device with the halftone dot patterns by using image areas of two or more kinds of halftone dots different in number of dots to be printed by the output device, and
   the step (4) of optimizing the halftone dot patterns so that the inputted density and the image area to be printed by the output device with the halftone dot patterns should be in a predetermined relation for at least a partial density range of the inputted density.

10. The screening method according to claim 9, wherein:

in the step (4) of optimizing, the halftone dot patterns are determined so that the inputted density and the image area to be printed by the output device with the halftone dot patterns should be in a relation represented by a linear function or a quadratic function.

11. The screening method according to claim 9, wherein:

in the step (4) of optimizing, the halftone dot patterns are determined so that change of the image area accompanying stepwise change of the inputted density should be constant.

12. The screening method according to any one of claims 9 to 11, wherein:

the halftone dot cells determined in the step (1) constitute multiple cells consisting of two or more of halftone dot cells, and
in the determination of the halftone dot patterns in the step (4), when there are two or more kinds of halftone dot patterns giving the same image area for a predetermined inputted density, a halftone dot pattern of the largest number of the halftone dot cells in which the halftone dots are arranged is chosen.

Fig.1

| | |
|---|---|
| 1% | 2% |
| 3% | 4% |

| | |
|---|---|
| 5% | 6% |
| 7% | 8% |

| | |
|---|---|
| 9% | 10% |
| 11% | 12% |

Fig.2

(a) One Dot

(c) Three Dots

(b) Two Dots

(d) Four Dots

Fig.3

EP 2 051 497 A1

401 —— Prepare
function.
y(i)＝ax(i)+c

i=1

402
Calculate output density y
of each combination
for input density xi.

403 Find a combination providing
an output density nearest to
xi.

i=i+1

404
Determine the combination
as a halftone dot pattern.

Are halftone patterns
determined for all of
densities x ?

No

Yes

End

Fig.4A

15

Start

411 — Input resolution/ screen ruling
Select cell configuration.

410 — Reference halftone dot patterns corresponding to cell configurations

412 — Read in reference halftone dot patterns.

420 — Image area data of plural kinds of halftone dots

413 — Input an optimization range. Calculate output densities using the reference halftone dot patterns of minimum and maximum densities of optimization range.

414 — Determine a function.
$y' = f(x)$ (x:densitiy, y': image area)

j=1

j=j+1

415 — Calculate image areas $y'j1 \sim y'jn$ of halftone dot pattern candidates $1 \sim n$ for density xj.
$(n = 1, 2, 3 \cdots)$

416 — Among plural candidates of halftone dot pattern, select a candidate providing image area $(y'j1 \sim y'jn)$ nearest to y'j, which satisfies $y'j = f(x)$.

417 — Are there two or more of candidates?    NO

419 — YES
Select a candidate having the largest number of cells as a halftone dot pattern for density xj.

418 — Select a candidate which satisfies the condition as a halftone dot pattern for density xj.

NO    j=max ?

YES

End

Fig.4B

Fig.5

Fig.6

Fig.7

Fig.8

Fig.9

**INTERNATIONAL SEARCH REPORT**

| International application No. |
|---|
| PCT/JP2007/065499 |

A.  CLASSIFICATION OF SUBJECT MATTER
*H04N1/405*(2006.01)i, *B41C1/00*(2006.01)i, *G06T5/00*(2006.01)i

According to International Patent Classification (IPC) or to both national classification and IPC

B.  FIELDS SEARCHED

Minimum documentation searched (classification system followed by classification symbols)
H04N1/405, B41C1/00, G06T5/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2000-341521 A  (Dainippon Screen Mfg. Co., Ltd.), 08 December, 2000 (08.12.00), Full text; all drawings (Family: none) | 1-12 |
| X<br>Y | JP 59-132280 A  (Fujitsu Ltd.), 30 July, 1984 (30.07.84), Full text; all drawings (Family: none) | 1-5,7-11<br>6,12 |
| X<br>Y | JP 63-144657 A  (Olympus Optical Co., Ltd.), 16 June, 1988 (16.06.88), Full text; all drawings (Family: none) | 1-5,7-11<br>6,12 |

| ☒ Further documents are listed in the continuation of Box C. | ☐ See patent family annex. |
|---|---|

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>11 October, 2007 (11.10.07) | Date of mailing of the international search report<br>23 October, 2007 (23.10.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/065499

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 5-30343 A  (Nippon Steel Corp.),<br>05 February, 1993 (05.02.93),<br>Full text; all drawings<br>(Family: none) | 1-5,7-11<br>6,12 |
| X<br>Y | JP 7-254984 A  (Matsushita Electric Industrial Co., Ltd.),<br>03 October, 1995 (03.10.95),<br>Full text; all drawings<br>(Family: none) | 1-5,7-11<br>6,12 |
| Y | JP 2003-143405 A  (Fuji Photo Film Co., Ltd.),<br>16 May, 2003 (16.05.03),<br>Full text; all drawings<br>& US 2002-186417 A1 | 6,12 |

Form PCT/ISA/210 (continuation of second sheet) (April 2005)

**EP 2 051 497 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006094566 A

- JP 2003158633 A